(19) Europäisches Patentamt

European Patent Office

Office européen des brevets

(11) Veröffentlichungsnummer: **0 000 404**
**B1**

(12) **EUROPÄISCHE PATENTSCHRIFT**

(21) Anmeldenummer: **78200032.7**

(22) Anmeldetag: **05.06.78**

(51) Int. Cl.³: **B 62 D 1/04,**
**B 26 D 1/18**

(54) Sicherheitslenkrad für Kraftfahrzeuge

(30) Priorität: **07.07.77 DE 2730672**

(43) Veröffentlichungstag der Anmeldung:
**24.01.79 Patentblatt 79/02**

(45) Bekanntmachung des Hinweises auf die Patenterteilung:
**03.09.80 Patentblatt 80/18**

(84) Benannte Vertragsstaaten:
**DE FR GB SE**

(56) Entgegenhaltungen:
**DE - A - 2 005 421**
**DE - A - 2 338 115**
**FR - A - 2 335 746**
**GB - A - 1 208 396**
**US - A - 2 830 807**
**US - A - 3 364 785**
**US - A - 3 417 950**
**US - A - 3 493 244**

(73) Patentinhaber: **Karl-Schmidt GMBH**
**Christian-Schmidt-Strasse 8/12**
**D - 7107 Neckarsulm (DE)**

(72) Erfinder: **Korn, Hans, Dipl.-Kfm.**
**Bachstrasse 10**
**D - 6450 Hanau (DE)**
**Grothe, Klaus, Ing. grad.**
**Karlstrasse 13**
**D - 8750 Aschaffenburg (DE)**

(74) Vertreter: **Fischer, Ernst, Dr.**
**Reuterweg 14**
**D - 6000 Frankfurt am Main 1 (DE)**

Courier Press, Leamington Spa, England.

Sicherheitslenkrad für Kraftfahrzeuge

Die Erfindung betrifft ein Sicherheitslenkrad für Kraftfahrzeuge, bei dem die Lenkradnabe gegenüber dem Lenkradkranz versenkt und zwischen Lenkradnabe und Lenkradkranz ein Deformationskörper angeordnet ist.

Bei einem derartigen Lenkrad, wie es beispielsweise in der US-PS 2 946 869 beschrieben ist, besteht eine gewisse Sicherheit gegen Unfallverletzung durch die gegenüber dem Lenkradkranz versenkt angeordneten Nabe. Der Oberkörper des im Falle eines Unfalls nach vorn schleudernden Fahrers wird durch den Lenkradkranz abgefangen.

Zur Erhöhung der inneren Sicherheit von Kraftfahrzeugen ist allgemein die Verwendung von Polyurethanschaum als Schutzpolster, beispielsweise aus dem DT-GM 69 45 050, bekannt. So ist im einzelnen vorgesehen, den Lenkradkranz mit Kunststoff zu umschäumen (DT-OS 19 20 064) und/oder, um den Körperaufschlag auf eine möglichst große Fläche zu verteilen, innerhalb des Lenkradkranzes einen großflächigen, mit einem geschäumten Kunststoff gepolsterten Deformationskörper anzubringen (DT-AS 18 15 130).

Bei der Entwicklung solcher Deformationskörper wird angestrebt, daß die Kraft-Weg-Linie möglichst eine Horizontale über dem Verformungsweg ist, d.h., daß die Verzögerung beim Aufprall weitgehend konstant ist. Ferner sollen aus Gewichtsgründen derartige Deformationskörper zwar ausreichend stabil aber nicht zu schwer sein. Der Forderung, eine möglichst konstante Verzögerung bei der Verformung zu erzielen, werden jedoch die bisher verwendeten Polyurethanschäume aufgrund ihrer Weichheit und Elastizität nicht gerecht, so daß sich über dem Verformungsweg eine sehr unregelmäßige 'kraftaufnahme ergibt. Darüberhinaus besitzen die Polyurethanschäume eine vergleichsweise geringe Eigenstabilität, so daß sie bei punktförmiger Belastung, beispielsweise durch Stoß mit einem kleinflächigen Gegenstand im Bereich der belasteten Stelle, zerstört werden.

Auch haben diese Deformationskörper den Nachteil, daß sie Formänderungsarbeit in aller Regel nur bei vergleichsweise hoher Belastung aufnehmen, so daß sie beim Aufschlag des Kopfes ihre Wirkung nicht oder nur unvollkommen entfalten.

Der Erfindung liegt deshalb die Aufgabe zugrunde, bei einem Sicherheitslenkrad für Kraftfahrzeuge, bei dem die Lenkradnabe gegenüber dem Lenkradkranz versenkt und zwischen Lenkradnabe und Lenkradkranz ein Deformationskörper angeordnet ist, diesen so auszubilden, daß im Falle einer Verformung die Verzögerung annähernd konstant gehalten wird und damit eine regelmäßige Kraftaufnahme erfolgt.

Ferner soll erreicht werden, daß die Deformationskörper ihre Wirkung auch bei Kopfaufschlag voll entfalten und daß sie bei punktförmiger Belastung im Bereich der belasteten Stelle nicht mehr zerstört werden.

Die Lösung dieser Aufgabe besteht darin, daß der bei dem eingangs genannten Lenkrad zwischen Lenkradnabe und Lenkradkranz angeordnete Deformationskörper erfindungsgemäß aus einem mit homogenem, plastisch verformbarem Kunststoff, vorzugsweise Polyurethan, ausgeschäumten Metalldrahtgestrick besteht. Eine zwechmäßige Weiderbildung der Eufindung liegt danin, daß in an sich bekannter Weise der Kunststoffschaum eine mikroporöse geschlossene Oberfläche aufweist (DT-GM 71 25 806).

Die Kombination eines Kunststoffschaumes mit einem Drahtgestrick ergibt den besonderen Effekt einer nahezu konstanten Verzögerung. Wird ein aus diesem Material bestehender Deformationskörper verformt, dann wird dieser entlang des Verformungsweges mit großer Regelmäßigkeit bei nahezu gleichbleibendem Verzögerungsverlauf zusammengedrückt. Das Zusammendrücken des Deformationskörpers beginnt mit der Krafteinleitung und setzt sich gleichmäßig fort, bis die aufgebrachte kinetische Energie aufgezehrt ist. Bei vergleichsweise geringer Krafteinwirkung wird der Deformationskörper. nur zu einem Teil zusammengedrückt, während das Restprofil im wesentlichen unverändert bleibt.

Die weiteren Vorteile des Gegenstandes der Erfindung liegen in der serienmäßigen Herstellung, in den niedrigen Herstellungskosten und in ihrem geringen Gewicht. Die Energieaufnahme kann durch die Abmessungen des Deformationskörpers, durch die Dicke der verwendeten Drähte und durch die Dichte des Kunststoffschaums verbestimmt und somit auf Fahrzeuge verschiedener Gewichts- und Leistungsklassen abgestimmt werden.

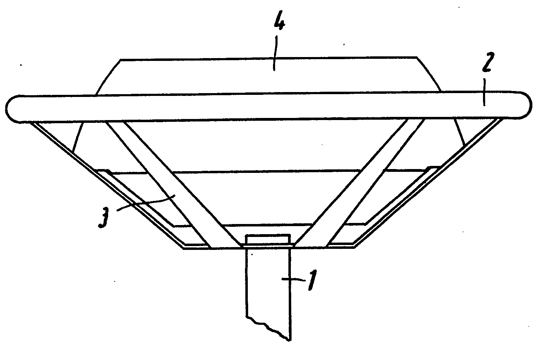

Die Erfindung ist in der Zeichnung schematisch und beispielhaft dargestellt und wird im folgenden näher beschrieben:

Die Seitenansicht zeigt ein schüsselförmiges Sicherheitslenkrad, bei dem die Lenkradnabe 1 gegenüber dem Lenkradkranz 2 versenkt angeordnet ist. Der auf den Lenkradspeichen 3 angeordnete Deformationskörper 4 besteht aus dem Metalldrahtgestrick, das mit Polyurethan ausgeschäumt ist.

**Patentansprüche**

1. Sicherheitslenkrad für Kraftfahrzeuge, bei dem die Lenkradnabe gegenüber dem Lenkradkranz versenkt und zwischen Lenkradnabe und Lenkradkranz ein Deformationskörper angeordnet ist, *dadurch gekennzeichnet*, daß der Deformationskörper (4) aus einem Metalldrahtgestrick besteht, das mit einem homogenen, plastisch verformbaren Kunststoff, vorzugsweise Polyurethan, ausgeschäumt ist.

2. Lenkrad nach Anspruch 1, *dadurch gekennzeichnet,* daß der Kunststoffschaum eine mikroporöse geschlossene Oberfläche aufweist.

3. Lenkrad nach den Ansprüchen 1 und 2, *dadurch gekennzeichnet,* daß die Dicke der Drähte des Gestricks und die Dichte des Kunststoffschaums auf Gewicht und Leistung des Kraftfahrzeuges abstimmbar ist.

## Claims

1. A safety steering wheel for motor vehicles, in which the steering wheel hub is recessed from the steering wheel rim and a deformable body is disposed between the steering wheel hub and the steering wheel rim, characterized in that the deformable body (4) consists of knitted metal wire, which is embedded in homogeneous, plastically deformable, foamed plastic material, preferably polyurethane.

2. A steering wheel according to claim 1, characterized in that the foamed plastic material has microporous, closed surface.

3. A steering wheel according to claims 1 and 2, characterized in that the thickness of the knitted wire and the density of the foamed plastics material are adapted to be matched to the weight and power of the motor vehicle.

## Revendications

1. Volant de direction à sécurité pour véhicules automobiles, dans lequel le moyeu du volant est en retrait par rapport à la couronne dudit volant et dans lequel un corps déformable est disposé entre le moyeu et la couronne dudit volant, caractérisé par le fait que le corpos déformable (4) est constitué par un tricot de fils métalliques qui est enrobé d'une mousse d'une matière plastique homogène et plastiquement déformable. de préférence du polyuréthane, et réalisée sur le tricot lui-même.

2. Volant de direction suivant la revendication 1, caractérisé par le fait que la matière plastique mousse comporte une surface microporeuse fermée.

3. Volant de direction suivant les revendications l et 2 prises dans leur ensemble, caractérisé par le fait que l'épaisseur des fils du tricot et la densité de la matière plastique mousse peuvent être adaptées au poids et à la puissance du véhicule automobile.